# EUROPEAN PATENT APPLICATION

(11) **EP 2 916 323 A1**
(43) Date of publication of application: **09.09.2015**
(21) Application number: 12887474.0
(22) Date of filing: 30.10.2012
(51) Int. Cl.: G11B 5/09, G07D 9/00

(54) **MAGNETIC CARD READER AND MAGNETIC CARD READING METHOD**

(71) Applicant: Hitachi-Omron Terminal Solutions, Corporation, Tokyo 141-8576 (JP)
(72) Inventor: NAGANAWA, Makoto, Tokyo 141-8576 (JP); SUZUKI, Tadamichi, Tokyo 141-8576 (JP)
(74) Representative: MERH-IP Matias Erny Reichl Hoffmann
(86) International application number: PCT/JP2012/006941
(87) International publication number: WO 2014/068608

(57) **Abstract**

A magnetic card reader equipped with: a magnetic card insertion slot; a magnetic noise generation unit that is provided near the magnetic card insertion slot; at least one magnetic head, said magnetic head having multiple magnetic reading components, that reads a first signal that contains magnetic noise from the magnetic noise generation unit and a signal recorded in a magnetic body of the magnetic card in a superimposed manner, and a second signal that contains only the magnetic noise generated by the magnetic noise generation unit; and a data processing unit that removes the second signal from the first signal.

## Description

### TECHNICAL FIELD

The present invention relates to magnetic card reading technologies for preventing a skimming.

### BACKGROUND ART

There are some cases where the following crime is committed: A skimming device is deployed before the magnetic card insertion slot of a card reader. Then, a magnetic signal of the magnetic card is read at the taken-in time of the magnetic card. As a countermeasure against this crime, there has been known the following technology (PATENT LITERATURE 1): A magnetic field generation device is provided outside the magnetic card insertion slot. Then, a magnetic noise is generated from the magnetic field generation device, thereby preventing the skimming device from reading the correct magnetic signal. Also, there has been known the following technology (PATENT LITERATURE 2): A loop antenna is deployed such that it encloses surroundings of the magnetic card insertion slot. Then, a magnetic noise is generated from the loop antenna, thereby preventing the skimming device from reading the correct magnetic signal.

### CITATION LIST

### PATENT LITERATURE

PATENT LITERATURE 1: JP-A-2001-67524
PATENT LITERATURE 2: JP-A-2005-266999

### SUMMARY OF INVENTION

### TECHNICAL PROBLEM

In some cases, however, the magnetic noise also exerts its influence onto a magnetic head inside the card reader, thereby making it impossible to properly read the magnetic signal of the magnetic card. On account of this, when the magnetic head of the card reader reads the magnetic signal of the magnetic card, the generation of the magnetic noise by the magnetic field generation device or the loop antenna is interrupted, or the intensity of the magnetic noise is lowered. As a result, there existed a problem that security becomes lowered. On account of this, a technology has been desired which allows the magnetic signal to be properly read without interrupting the generation of the magnetic noise by the magnetic field generation device or the loop antenna, or without lowering the intensity of the magnetic noise.

### SOLUTION TO PROBLEM

The present invention has been devised in order to solve at least a part of the above-described problem. The present invention can be embodied as the following aspect.

According to one aspect of the present invention, there is provided a magnetic card reading device. When a magnetic noise generation device is set up which is set up at a magnetic card insertion slot, the magnetic card reading device of this aspect includes a first magnetic head for reading a first signal, the first signal including a magnetic noise, superimposed thereon, generated from the magnetic noise generation device, a second magnetic head for acquiring a second signal, the second signal including only the magnetic noise generated by the magnetic noise generation device, and a data processing unit for removing the second signal from the first signal.

### ADVANTAGEOUS EFFECTS OF INVENTION

According to this magnetic card reading device, the magnetic noise generated from the magnetic noise generation device makes it possible to obstruct the reading performed by the skimming device. Simultaneously, the data processing unit removes the second signal, which is a signal of the magnetic noise alone, from the first signal, which includes the magnetic noise superimposed thereon. As a result, the magnetic signal written into the magnetic body can be restored easily.

Incidentally, the present invention can be embodied as a variety of aspects. For example, in addition to the magnetic card reading device, the present invention can be embodied as such an aspect as a magnetic card reading method.

### BRIEF DESCRIPTION OF THE DRAWINGS

[FIG. 1] This is an explanatory diagram for schematically illustrating a magnetic card reading device of a first embodiment.
[FIG. 2] This is an explanatory diagram for illustrating the configuration of a magnetic head.
[FIG. 3] This is an explanatory diagram for illustrating the configuration of a magnetic card.
[FIG. 4] This is a flowchart for illustrating reading of the magnetic card in the first embodiment.
[FIG. 5] This is a flowchart for illustrating the signal analysis at the step S450.
[FIG. 6] This is an explanatory diagram for illustrating the state of inside of the magnetic card reading device immediately before re-execution of the reading.
[FIG 7] This is a flowchart for illustrating the re-execution of the reading of the magnetic card.
[FIG 8] This is a flowchart for illustrating the signal analysis at the step S725.
[FIG. 9] This is an explanatory diagram for illustrating magnetic signals written into tracks.
[FIG 10] This is an explanatory diagram for illustrating the signals read from the tracks, and a magnetic noise generated by a magnetic noise generation device.
[FIG. 11] This is an explanatory diagram for illustrating signals obtained by subtracting the magnetic noise from the signals read from the tracks.
[FIG. 12] This is a flowchart for illustrating reading of the magnetic card in the second embodiment.
[FIG. 13] This is a flowchart for illustrating the re-execution of the reading of the magnetic card at the step S1270.
[FIG 14] This is an explanatory diagram for illustrating signals read from tracks, and a magnetic noise in the second embodiment.
[FIG 15] This is an explanatory diagram for illustrating a processing of subtracting the magnetic noise from the signal read from the track, and a signal obtained after this processing.
[FIG. 16] This is a flowchart for illustrating reading of the magnetic card in the third embodiment.
[FIG 17] This is a flowchart for illustrating the re-execution of the reading of the magnetic card at the step S1670.
[FIG 18] This is an explanatory diagram for illustrating signals acquired at the steps S1710-S1715, and a magnetic noise generated by a magnetic noise generation device.
[FIG. 19] This is an explanatory diagram for illustrating signals calculated at the steps S1720-S1735.

### DESCRIPTION OF EMBODIMENTS

Hereinafter, embodiments will be explained, using the drawings.

### EMBODIMENT 1

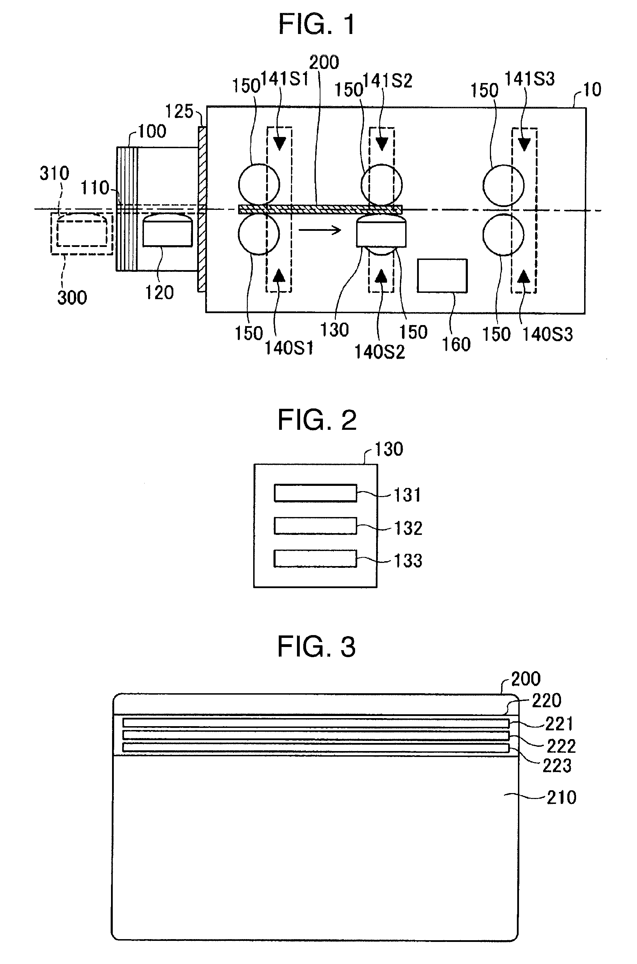

FIG 1 is an explanatory diagram for schematically illustrating a magnetic card reading device 10 of a first embodiment. The magnetic card reading device 10 includes a magnetic noise generation device 100, a shutter 125, a magnetic head 120, a magnetic head 130, card detection sensors 140S1-140S3, a roller 150, and a control unit 160. The magnetic noise generation device 100 is deployed in proximity to a magnetic card insertion slot 110 of the magnetic card reading device 10. The magnetic noise generation device 100 is formed with, for example, an electromagnetic coil. There exists a possibility that, as indicated by the dashed line, a magnetic card skimming device 300 is set up in proximity to the magnetic card insertion slot 110 by a malicious third party. The magnetic noise generation device 100 obstructs the reading of a magnetic signal of a magnetic card 200 performed by the magnetic card skimming device 300. The magnetic card skimming device 300 includes a magnetic head 310 for reading the magnetic signal of the magnetic card 200.

The shutter 125 is set up for preventing such mischief as the insertion of a foreign body from the magnetic card insertion slot 110. The magnetic head 120 is set up for detecting that the foreign body is inserted from the magnetic card insertion slot 110. Incidentally, in the first embodiment, it is also allowable not to employ the shutter 125 and the magnetic head 120. Additionally, the magnetic head 120 is also referred to as a magnetic head Y.

FIG. 2 is an explanatory diagram for illustrating the configuration of the magnetic head 130. The magnetic head 130 includes three magnetic reading elements 131, 132, and 133 that are deployed in parallel to the transportation direction of the magnetic card 200. The magnetic reading elements 131-133 read the magnetic signal from the magnetic body 220 on the magnetic card 200. Also, the magnetic reading elements 131-133 can write the magnetic signal into the magnetic body 220 on the magnetic card 200. Incidentally, the magnetic head 130 is also referred to as a magnetic head X.

The card detection sensors 140S1-140S3 in FIG. 1 detect the position of the magnetic card 200. For example, the card detection sensors 140S1-140S3 are equipped with light-receiving sensors. The light-receiving sensors receive optical signals from light emitters 141S1-141S3 that are deployed on the opposite side thereto with the transportation path of the magnetic card 200 sandwiched therebetween. The optical paths ranging from the light emitters 141S1-141S3 to the card detection sensors 140S1-140S3 are blocked by the magnetic card 200. This allows the card detection sensors 140S1-140S3 to detect the position of the magnetic card 200. The roller 150, which is driven by not-illustrated motors, transports the magnetic card 200 in such a manner that the magnetic card 200 is sandwiched from above and below. In correspondence with the analysis result of the magnetic signal read from the magnetic body of the magnetic card 200, the control unit 160 performs control over the re-reading (i.e., retry) of the magnetic signal of the magnetic body of the magnetic card 200.

FIG. 3 is an explanatory diagram for illustrating the configuration of the magnetic card 200. The magnetic card 200 includes a card medium 210 and a magnetic body 220. The card medium 210 is a substantially rectangular plate that is formed of plastic. The magnetic body 220 is a magnetic stripe that is formed along one of the longer sides of the card medium 210. When the magnetic card 200 displaces on the magnetic head 130, the magnetic reading elements 131-133 write the magnetic signal into the magnetic body 220, or read the magnetic signal from the magnetic body 220. On account of this, the magnetic body 220 is equipped with three tracks 221-223, which are parallel to the displacement direction of the magnetic card 200, and into which the magnetic signal is to be written. Incidentally, if the size of the magnetic reading elements 131-133 is made smaller, the number of the tracks into which the magnetic signal is to be written can be made larger than three.

The operation principle of the first embodiment is as follows: In the first embodiment, of the three tracks 221-223, no magnetic signal is written into one track or two tracks, but the magnetic signal is written into the remaining two tracks or one track. For example, it is assumed that the magnetic signal is written into the tracks 221 and 222, but that no magnetic signal is written into the track 223. The data structure of the track 223 is specified by ISO/EEC 4909, but it is an unused structure in many cases. The data structure where no signal is written is also referred to as the unencode. Incidentally, entirely the same data (1 or zero) may also be written into the track 223. The magnetic reading elements 131-133 are set up on one and the same magnetic head 130. Accordingly, when the magnetic reading elements 131-133 read the magnetic signals of the three tracks 221-223, the magnetic reading elements 131-133 are capable of reading the signals simultaneously. Also, the magnetic noise from the magnetic noise generation device 100 provides the magnetic noise of the same magnitude to the magnetic reading elements 131-133 with the same timing. Consequently, the signals read by the magnetic reading elements 131 and 132 are the signals in which the magnetic noise is superimposed on the magnetic signals written into the tracks 221 and 222. Meanwhile, since no magnetic signal is written into the track 223, the signal read by the magnetic reading element 133 is only the signal caused by the magnetic noise from the magnetic noise generation device 100. Here, as described above, since the magnetic reading elements 131-133 are set up on one and the same magnetic head 130, the magnetic noise provides the magnetic noise of the same magnitude to the magnetic reading elements 131-133 with the same timing. Accordingly, the value of the signal read by the magnetic reading element 133 is subtracted from the values of the signals read by the magnetic reading elements 131 and 132. This subtraction makes it possible to restore the signals in which the magnetic noise is removed, i.e., the original magnetic signals written into the tracks 221 and 222.

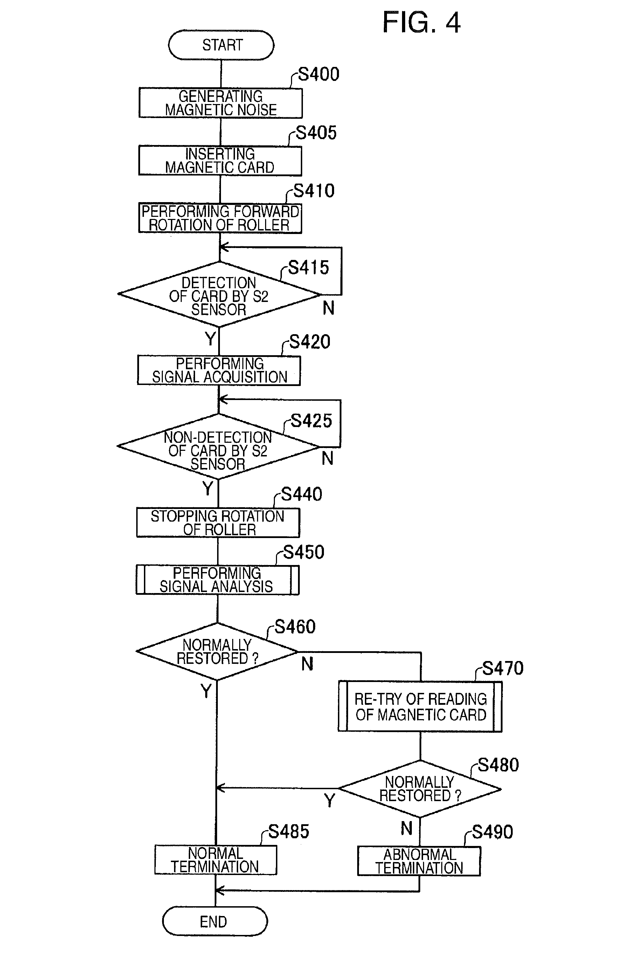

FIG. 4 is a flowchart for illustrating reading of the magnetic card in the first embodiment. At a step S400, the control unit 160 instructs the magnetic noise generation device 100 to generate the magnetic noise. In accordance with this instruction, the magnetic noise generation device 100 generates the magnetic noise. At a step S405, the control unit 160 detects the insertion of the magnetic card 200. The control unit 160 detects the insertion of the magnetic card 200, using the card detection sensor 140S1, for example. If the magnetic card reading device 10 includes the magnetic head 120, the control unit 160 may also detect the insertion of the magnetic card 200, using the signal from the magnetic head 120.

At a step S410, the control unit 160 performs a forward rotation of the roller 150. Incidentally, in the present embodiment, the rotation of the roller 150 at the time when the magnetic card 200 is transported in the back direction (i.e., right direction in FIG. 1) of the magnetic card reading device 10 is referred to as the forward rotation. Meanwhile, the rotation of the roller 150 at the time when the magnetic card 200 is transported in the direction of the magnetic card insertion slot 110 (i.e., left direction in FIG. 1) is referred to as reverse rotation.

When, at a step S415, the control unit 160 detects that the magnetic card 200 has attained up to the card detection sensor 140S2, the control unit 160 transfers the processing to a step S420. Here, the control unit 160 reads the magnetic signals of the three tracks 221-223, using the magnetic reading elements 131-133. Incidentally, when the control unit 160 reads the magnetic signals of the three tracks 221-223, it reads the signals in which the magnetic noise from the magnetic noise generation device 100 is superimposed. Accordingly, this reading is also referred to as "reading the signals of the tracks 221-223". Hereinafter, when, at a step S425, the control unit 160 detects that the magnetic card 200 has passed through the card detection sensor 140S2, the control unit 160 transfers the processing to a step S440. Here, the control unit 160 stops the rotation of the roller 150, thereby stopping the transportation of the magnetic card 200. At a step S450, the control unit 160 performs the analysis of the signals read from the three tracks 221-223.

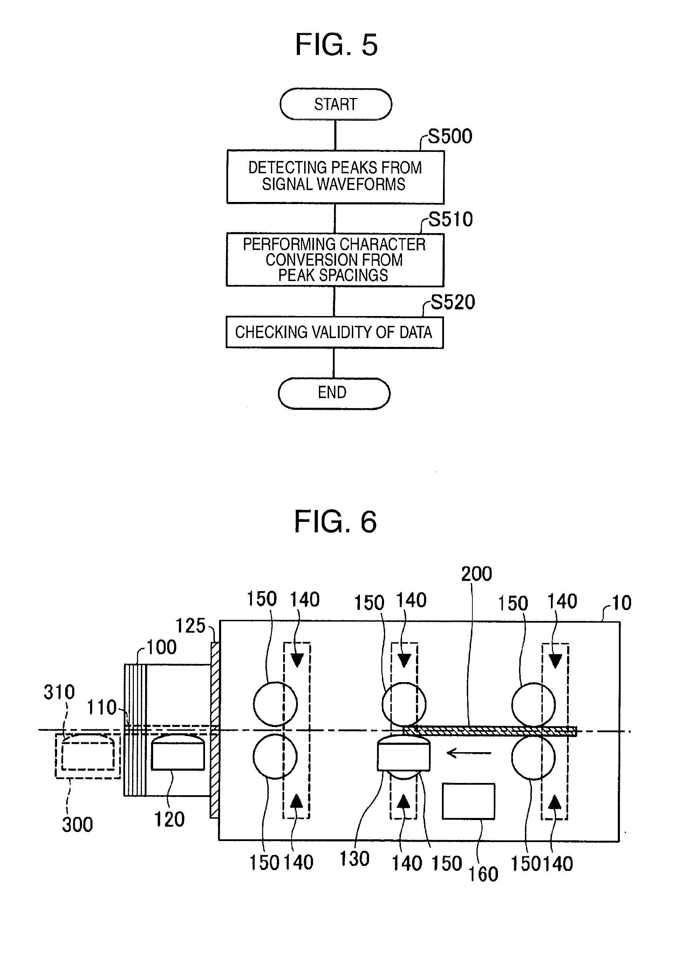

FIG 5 is a flowchart for illustrating the analysis of the signals at the step S450. At a step S500, the control unit 160 detects the respective peaks of the signals acquired from the three tracks 221-223. At a step S510, the control unit 160 performs a character conversion from spacings of the peaks of the signals acquired from the three tracks 221-223. At a step S520, the control unit 160 checks the validity of the data. Concretely, the control unit 160 judges whether or not the data after being character-converted coincides with a predetermined standard. For example, the predetermined standard is the standard specified by ISO/IEC 7813. Here, as described above, no signal is written into the track 223. Accordingly, the peak of the signal acquired from the track 223 is caused by the magnetic noise. As a result, usually, this peak cannot be character-converted properly. Also, even if the peak were able to be character-converted, the peak after being character-converted does not coincide with the predetermined standard. Incidentally, since no signal is written into the track 223, there exists no problem even if the peak cannot be character-converted properly, or even if the peak after being character-converted does not coincide with the predetermined standard. Meanwhile, the signals acquired from the tracks 221 and 222 are the signals in which the magnetic noise from the magnetic noise generation device 100 is superimposed on the signals written into the tracks 221 and 222. On account of this, concerning the signals acquired from the tracks 221 and 222, the influence of the magnetic noise results in a character-conversion-capable case and a character-conversion-incapable case. Moreover, even in the character-conversion-capable case, the peak after being character-converted does not coincide with the predetermined standard in some cases.

Returning to FIG. 4, the explanation will be continued. At a step S460, the control unit 160 judges whether or not the signals written into the tracks 221 and 222 have been able to be normally restored from the signals acquired from the tracks 221 and 222. Here, to be normally restored means that the signals can be character-converted, and further, the signals that coincide with the predetermined standard can be obtained. If the signals written into the tracks 221 and 222 have been able to be normally restored, the control unit 160 transfers the processing to a step S485, then performing the normal termination of the processing. Even when the magnetic noise is superimposed on the signals read from the tracks, if the signals written into the tracks can be normally restored, there exists no problem. Meanwhile, if the signals written into the tracks 221 and 222 have been not able to be normally restored, the control unit 160 transfers the processing to a step S470, then performing re-execution (i.e., retry) of the reading of the magnetic card 200.

FIG. 6 is an explanatory diagram for illustrating the state of inside of the magnetic card reading device immediately before the re-execution of the reading of the magnetic card 200. The magnetic card 200 has been transported up to a position that is back side (i.e., opposite side to the magnetic card insertion slot 110) when seen from the magnetic head 130. In the re-execution of the reading of the magnetic card 200, the reverse rotation of the roller 150 is performed. As a result, the magnetic card 200 is transported in the direction of the magnetic card insertion slot 110 (i.e., left direction in FIG. 6). However, the magnetic card 200 may also be transported up to the position illustrated in FIG. 1, and be transported by the roller 150 in the opposite direction to the magnetic card insertion slot 110 (i.e., left direction in FIG 1).

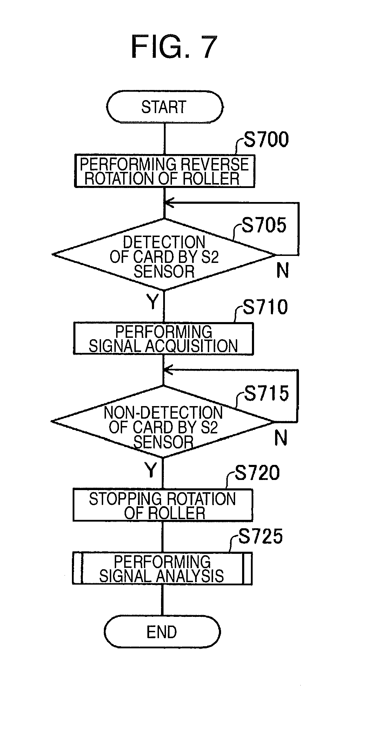

FIG. 7 is a flowchart for illustrating the re-execution of the reading of the magnetic card 200. At a step S700, the control unit 160 performs the reverse rotation of the roller 150. As a result, the magnetic card 200 is transported in the direction of the magnetic card insertion slot 110. When, at a step S705, the control unit 160 detects that the magnetic card 200 has attained up to the card detection sensor 140S2, the control unit 160 transfers the processing to a step S610. Here, the control unit 160 reads the signals of the three tracks 221-223, using the magnetic reading elements 131-133. When, at a step S715, the control unit 160 detects that the magnetic card 200 has passed through the card detection sensor 140S2, the control unit 160 transfers the processing to a step S720. Here, the control unit 160 stops the rotation of the roller 150, thereby stopping the transportation of the magnetic card 200. At a step S725, the control unit 160 performs the analysis of the signals read from the three tracks 221-223.

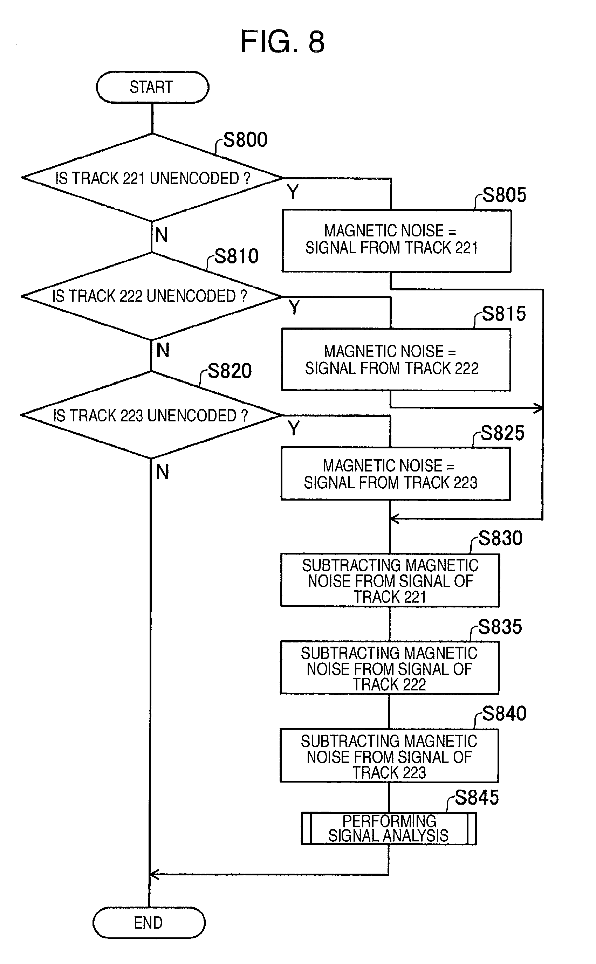

FIG 8 is a flowchart for illustrating the analysis of the signals at the step S725. At a step S800, the control unit 160 judges whether or not the track 221 is unencoded. The control unit 160 can judge whether or not the track 221 is unencoded in accordance with the following manner: When the magnetic signal is written into the track 221, the signal in which the magnetic noise is superimposed on the magnetic signal is read. This signal in which the magnetic noise is superimposed includes its peak whose height is higher than a predetermined height. Consequently, if all the heights of the peaks of this signal read from the track 221 are lower than the predetermined height, the control unit 160 can judge that the track 221 is unencoded.

If the track 221 is unencoded, the control unit 160 transfers the processing to a step S805, then judging that the signal of the track 221 is the magnetic noise. If the track 221 is not unencoded, the control unit 160 transfers the processing to a step S810, then executing basically the same processing concerning the track 222. Also, if the track 222 is not unencoded either, the control unit 160 transfers the processing to a step S820, then executing basically the same processing regarding the track 223. A step S815 is the step at which, if the track 222 is unencoded, the control unit 160 judges that the signal of the track 222 is the magnetic noise. A step S825 is the step at which, if the track 223 is unencoded, the control unit 160 judges that the signal of the track 223 is the magnetic noise. Incidentally, if any one of the signals read from the tracks 221-223 is judged to be the magnetic noise, the signals read from the other tracks are not judged to be the magnetic noises. Incidentally, in the present embodiment, since no magnetic signal is written into the track 223, the signal read from the track 223 is judged to be the magnetic noise. Additionally, as described above, the track 223 is not used in many cases. Accordingly, the control unit 160 may also makes the judgment on unencoded from the track 223.

If the signal read from any one of the tracks is the magnetic noise, at a step S830, the control unit 160 subtracts the magnetic noise from the signal read from the track 221. Similarly, at a step S835, the control unit 160 subtracts the magnetic noise from the signal read from the track 222, and, at a step S840, the control unit 160 subtracts the magnetic noise from the signal read from the track 223. After that, the control unit 160 transfers the processing to a step S845, then analyzing the signals. The analysis of the signals at the step S845 is basically the same processing as the processing explained in FIG. 5.

Returning to FIG 4, the explanation will be continued. At the step S450, the control unit 160 judges whether or not the signals written into the tracks have been able to be normally restored. If the signals written into the tracks have been able to be normally restored, the control unit 160 transfers the processing to the step S485, then performing the normal termination. Meanwhile, if the signals written into the tracks have been not able to be normally restored, the control unit 160 transfers the processing to a step S490, then performing the abnormal termination. Incidentally, if any one of the tracks is unencoded in the re-execution of the reading of the magnetic card 200, it is impossible to perform the restoration processing based on the present embodiment. Consequently, the control unit 160 judges that the situation is abnormal, then transferring the processing to the step S490.

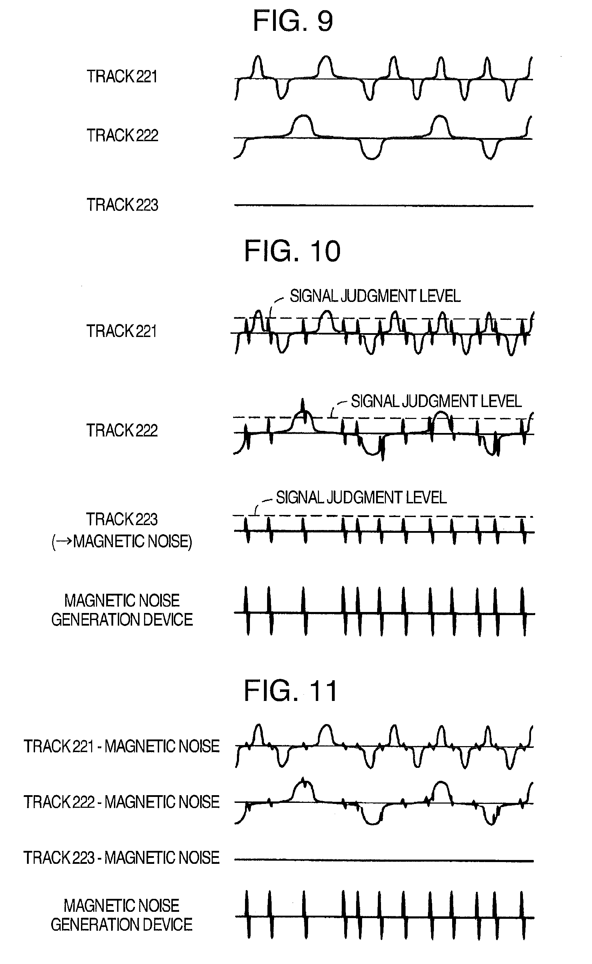

FIG. 9 is an explanatory diagram for illustrating the magnetic signals that are written into the tracks. FIG 9 shows that the magnetic signal is written into the tracks 221 and 222, but that no magnetic signal is written into the track 223.

FIG 10 is an explanatory diagram for illustrating the signals that are read from the tracks, and the magnetic noise generated by the magnetic noise generation device 100. FIG. 10 shows that, in the signals read from the tracks 221 and 222, the magnetic noise is superimposed on the magnetic signals illustrated in FIG. 9. Since no magnetic signal is written into the track 223 as was illustrated in FIG. 9, only the magnetic noise appears in the signal read from the track 223. Also, FIG 10 shows that the values of the signals read from the tracks 221 and 222 are larger than a signal judgment level, and that the height of the magnetic noise of the signal read from the track 223 is smaller than the signal judgment level. Accordingly, the control unit 160 can judge that the signal read from the track 223 is the magnetic noise.

FIG. 11 is an explanatory diagram for illustrating signals that are obtained by subtracting the magnetic noise from the signals read from the tracks. The signals obtained by subtracting the magnetic noise from the signals read from the tracks 221 and 222 includes a little of magnetic noises but exhibit substantially the same shapes as those of the magnetic signals of the tracks 221 and 222 illustrated in FIG. 9. In the present embodiment, the signal read from the track 223 is judged to be the magnetic noise. As a result, the signal obtained by subtracting the magnetic noise from the signal read from the track 223 exhibits a flat signal level with no concavity/convexity found.

As having been explained so far, according to the first embodiment, of the three tracks 221-223 into which the magnetic signal is to be written, no magnetic signal is written into at least one track (e.g., the track 223). Moreover, the control unit 160 can judge that the signal read from the track 223 is the magnetic noise. Furthermore, the control unit 160 subtracts the magnetic noise from the signals read from the tracks 221 and 222. As a result, the control unit 160 can restore the magnetic signals written into the tracks 221 and 222.

Also, in the first embodiment, if the control unit 160 has been not able to properly restore the signals in the state where the control unit 160 performs the forward rotation of the roller 150, the control unit 160 performs the re-execution of the reading of the magnetic card 200 by performing the reverse rotation of the roller 150. On account of this, the case where the re-execution of the reading of the magnetic card 200 is performed in the case where the control unit 160 has been not able to properly restore the signals in the state where the control unit 160 performs the forward rotation of the roller 150. Consequently, an increase in the reading time can be suppressed as a whole.

In the first embodiment, the control unit 160 performs the re-execution of the reading of the magnetic card 200 by performing the reverse rotation of the roller 150. In substitution therefor, the control unit 160 may also identify the track of unencoded not by performing the re-execution of the reading, but by using the signals read from the tracks 221-223 at the time of the first forward rotation. This allows the control unit 160 to restore the signals of the other tracks, even if the control unit 160 does not perform the re-execution of the reading of the magnetic card 200.

In the first embodiment, the explanation has been given concerning the case where no magnetic signal is written into the track 223. It is also allowable, however, that the signal in which 1 and 0 of the track 221 are inverted to each other is written into the track 223. In this case, the control unit 160 makes the addition of the signal read from the track 221 and the signal read from the track 223. As a result, 1 components of the track 221 and 0 components of the track 223 are canceled out, and 0 components of the track 221 and 1 components of the track 223 are canceled out. Accordingly, only the magnetic noise remains. However, the magnitude of the magnetic noise after the addition processing becomes approximately two times larger as compared with the above-described first embodiment. Consequently, it is preferable to reduce the after-the-addition-processing magnitude of the magnetic noise down to its one-half, and to subtract this one-half from the signals read from the tracks 221 and 222.

### EMBODIMENT 2

The hardware configuration of a second embodiment is the same as the hardware configuration of the first embodiment. In the first embodiment, it is utilized that no magnetic signal is written into the one track 223 among the three tracks 221-223. Moreover, the signal read from the track 223, into which no magnetic signal is written, is judged to be the magnetic noise. Furthermore, the magnetic signals written into the three tracks 221-223 are restored by subtracting the magnetic noise from the signals read from the three tracks 221-223. In contrast thereto, in the second embodiment, a periodic magnetic noise is used as the magnetic noise. Moreover, signals are also read in the areas on direct extensions of the three tracks 221-223, i.e., the areas into which no magnetic signal is written. The signals read from the areas, into which no magnetic signal is written, are judged to be the periodic magnetic noises. Furthermore, the magnetic signals written into the three tracks 221-223 are restored by subtracting the magnetic noises from the signals read from the three tracks 221-223 with the timings of periodicities of the magnetic noises.

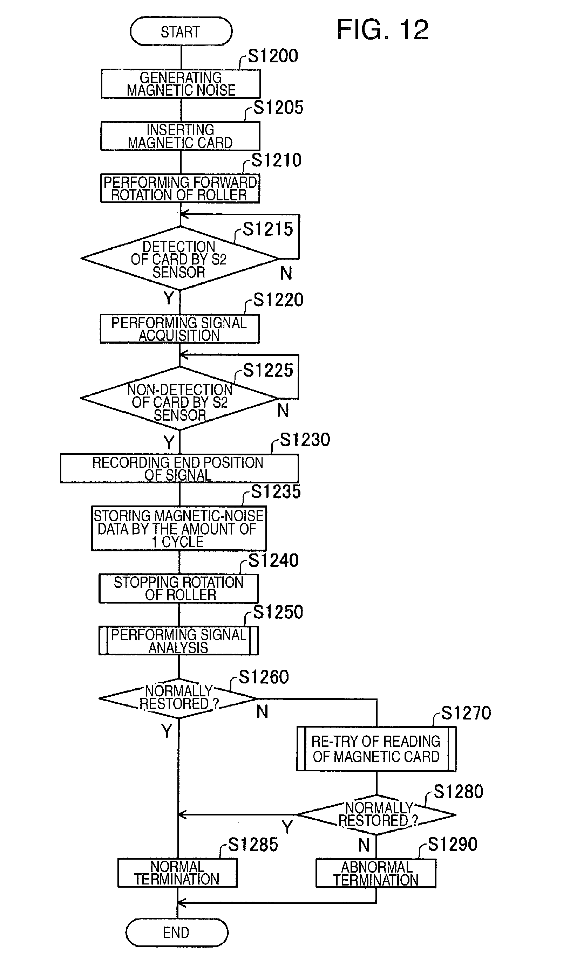

FIG 12 is a flowchart for illustrating reading of the magnetic card in the second embodiment. The processings ranging from a step S1200 to a step S1225 are the same as the processings ranging from the step S400 to the step S425 of the first embodiment explained in FIG. 4. Incidentally, the magnetic noise generated at the step S400 in FIG. 4 may be either the periodic magnetic noise or the random magnetic noise. In this embodiment, the magnetic noise generated at the step S1200 of the second embodiment is the periodic magnetic noise.

At a step S1230, the control unit 160 records the end position of the magnetic signal of the magnetic card 200. In general, the magnetic card 200 is equipped with the magnetic body 220 up to the edge of the card medium 210 in the longitudinal direction. Accordingly, the control unit 160 records the time when the magnetic card 200 has passed through the card detection sensor 140S2, and falls into a non-detection state. At a step S1235, using the magnetic reading elements 131-133, the control unit 160 acquires and records the magnetic noise by the amount of one cycle of the magnetic noise from the end position of the magnetic signal of the magnetic card 200. After that, at a step S1240, the control unit 160 stops the rotation of the roller 150.

At a step S1250, the control unit 160 performs the analysis of the signals acquired from the three tracks 221-223. This signal analysis is the same as the signal analysis performed at the step S450 of the first embodiment. At a step S1260, the control unit 160 judges whether or not the signals written into the tracks 221-223 have been able to be normally restored from the signals acquired from the tracks 221-223. If the signals written into the tracks 221-223 have been able to be normally restored, the control unit 160 transfers the processing to a step S1285, then performing the normal termination of the processing. Even when the magnetic noise is present in the signals read from the tracks 221-223, if the signals written into the tracks 221-223 can be normally restored, there exists no problem. Meanwhile, if the signals written into the tracks 221-223 have been not able to be normally restored, the control unit 160 transfers the processing to a step S1270, then performing re-execution (i.e., retry) of the reading of the magnetic card 200.

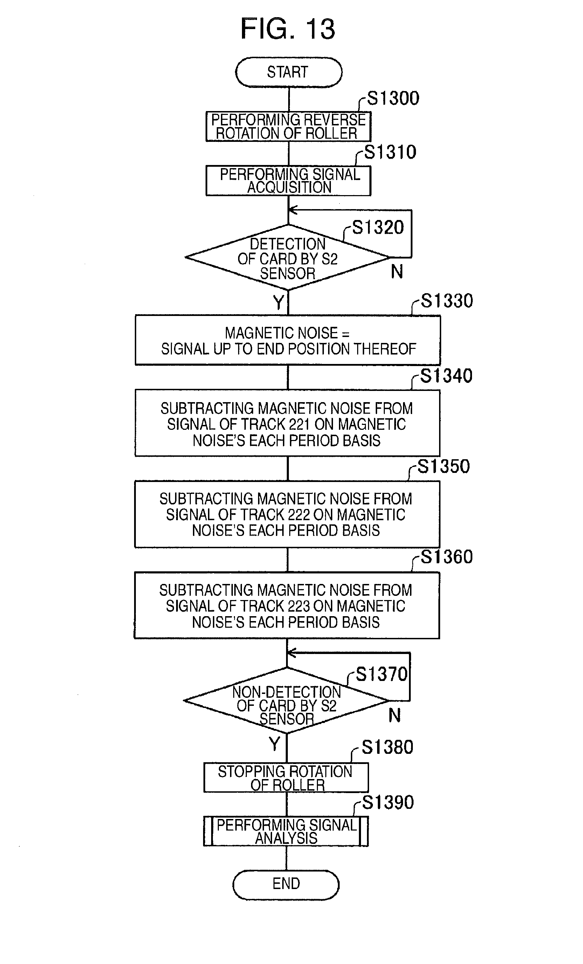

FIG. 13 is a flowchart for illustrating the re-execution of the reading of the magnetic card 200 at the step S1270. At a step S1300, the control unit 160 performs the reverse rotation of the roller 150. As a result, the magnetic card 200 is transported in the direction of the magnetic card insertion slot 110. At a step S1310, the control unit 160 reads the signals from the tracks 221-223, using the magnetic reading elements 131-133. Here, the start point at which the control unit 160 performs the reversing of the magnetic card 200 is a point at which it has displaced by the amount of just one cycle of the magnetic noise from a point at the time when the magnetic card 200 became non-detected by the card detection sensor 140S2. Accordingly, during the time-interval from the time at which the control unit 160 performs the reverse rotation of the roller 150 until the time when the magnetic card 200 becomes detected by the card detection sensor 140S2, the control unit 160 acquires the amount of exactly the one cycle of the signal of the area where the magnetic body does not exist. Namely, the control unit 160 acquires only the amount of the one cycle of the magnetic noise generated by the magnetic noise generation device 100. When, at a step S1320, the control unit 160 detects that the magnetic card 200 has just attained to the card detection sensor 140S2, the control unit 160 transfers the processing to a step S1330. Here, the control unit 160 interprets a signal of the amount of one cycle of the magnetic noise as a magnetic noise.

At steps S1340, S1350, and S1360, the control unit 160 sequentially subtracts the magnetic noise from the signals read from the respective tracks 221, 222, and 223 for each one cycle of the magnetic noise. When, at a step S1370, the control unit 160 detects that the magnetic card 200 has passed through the card detection sensor 140S2, the control unit 160 transfers the processing to a step S 13 80. Here, the control unit 160 stops the rotation of the roller 150, thereby stopping the transportation of the magnetic card 200. At a step S1390, the control unit 160 performs the analysis of the signals read from the three tracks 221-223. The control unit 160 performs this signal analysis in basically the same way as the signal analysis at the step S1250.

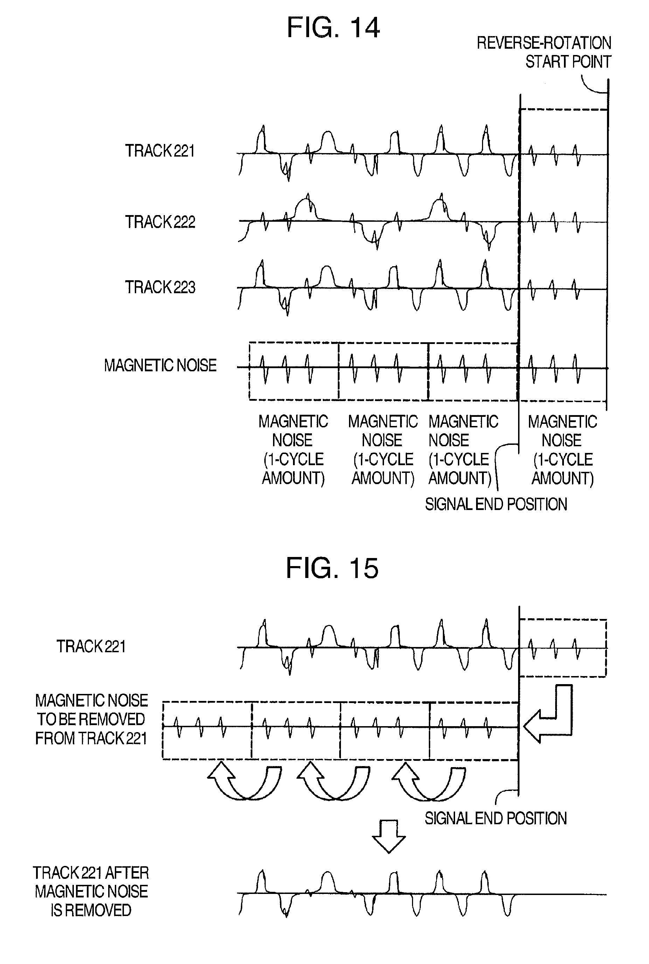

FIG. 14 is an explanatory diagram for illustrating the signals read from the tracks 221-223, and the magnetic noise in the second embodiment. The signals between the magnetic-signal end position and the reverse-rotation start point are the signals of the areas where the magnetic body 220 does not exist. Namely, the signals are the ones that are acquired by the magnetic reading elements 131-133's reading the magnetic noise generated by the magnetic noise generation device 100. The length between the magnetic-signal end position and the reverse-rotation start point is equivalent to exactly the amount of one cycle of the magnetic noise.

FIG. 15 is an explanatory diagram for illustrating a processing of subtracting the magnetic noise from the signal read from the track 221, and a signal obtained after this processing. Consequently, the control unit 160 sequentially subtracts the magnetic noise on the one-cycle basis with the timings in the left direction from the magnetic-signal end position of the track 221. This makes it possible to obtain the signal in which the magnetic noise is removed from the signal read from the track 221. Incidentally, the control unit 160 can perform the processing in basically the same way concerning the tracks 222 and 223 as well. Additionally, it is preferable that the magnetic noise determined on each track basis is used as the magnetic noise to be subtracted from the tracks 221-223.

As having been explained so far, according to the second embodiment, even when the signals are written into all of the tracks, it becomes possible for the control unit 160 to restore the signals written into the tracks by subtracting the magnetic noise from the signals read therefrom.

Incidentally, in the second embodiment, the control unit 160 performs the re-execution of the reading of the magnetic card 200 by performing the reverse rotation of the roller 150. In substitution therefor, the control unit 160 may also read the signals of the areas where the magnetic body 220 does not exist at the time of the first forward rotation without performing the re-execution of the reading. This allows the control unit 160 to restore the signals of the other tracks, even if the control unit 160 does not perform the re-execution of the reading of the magnetic card 200.

### EMBODIMENT 3

The hardware configuration of a third embodiment includes the magnetic head 120. In the hardware configuration of the first embodiment, it has been also allowable not to employ the magnetic head 120. In the third embodiment, the control unit 160 reads the magnetic noise by using a magnetic head other than the magnetic head 130 used for reading/writing the magnetic body 220 of the magnetic card 200, for example, the magnetic head 120 of the first embodiment. Moreover, the control unit 160 restores the signals written into the three tracks 221-223 by subtracting the magnetic noise from the signals read from the three tracks 221-223. For this purpose, when the magnetic head 130 is positioned under the magnetic body 220 of the magnetic card 200, the magnetic head 120 is required not to be positioned under the magnetic body 220 of the magnetic card 200. For this purpose, for example, the magnetic head 120 and the magnetic head 130 are required to be deployed such that the spacing between the magnetic head 120 and the magnetic head 130 becomes longer than the length of the magnetic card 200 in the displacement direction (i.e., length of the magnetic card 200 in the longitudinal direction). When the magnetic reading elements 131-133 of the magnetic head 130 read the signal of the magnetic body 220, the magnetic reading elements of the magnetic head 120 do not read the signal of the magnetic body 220. As a result, the magnetic reading elements of the magnetic head 120 read only the magnetic noise from the magnetic noise generation device 100.

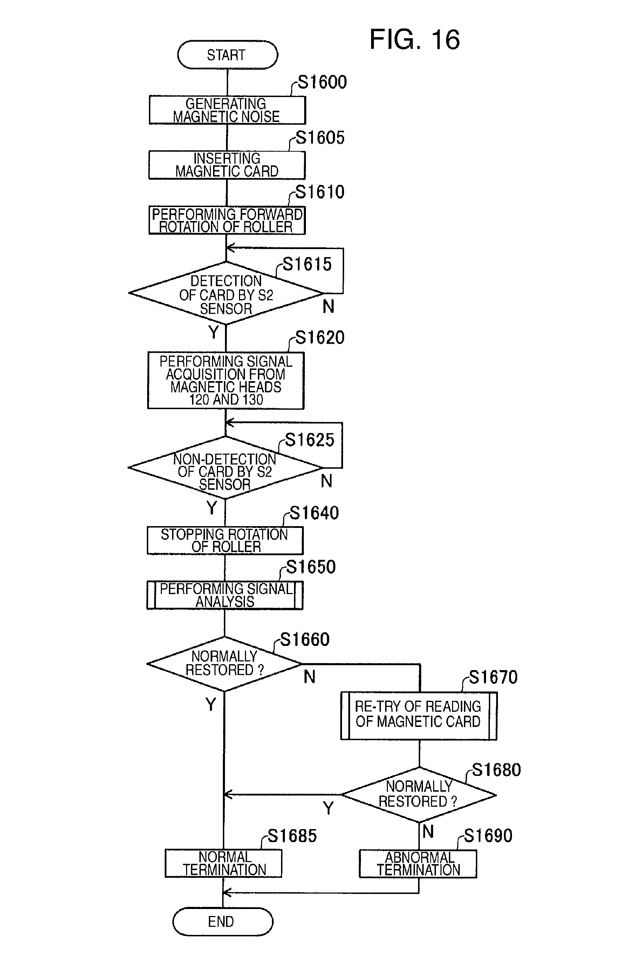

FIG. 16 is a flowchart for illustrating reading of the magnetic card in the third embodiment. The processings ranging from a step S1600 to a step S1615 are the same as the processings ranging from the step S400 to the step S415 of the first embodiment. At a step S1620, the control unit 160 reads the signals from the tracks 221-223 using the magnetic reading elements 131-133 of the magnetic head 130, and acquires the magnetic noise using the magnetic reading elements of the magnetic head 120. Incidentally, in the signals from the tracks 221-223, the magnetic noise from the magnetic noise generation device 100 is superimposed.

The processings at a step S1625 and a step S1640 are the same as the processings at the step S425 and the step S440 of the first embodiment. At a step S1650, the control unit 160 performs the analysis of the signals acquired from the three tracks 221-223. This operation is the same as the operation at the step S450 of the first embodiment. In the explanation in FIG. 5, the details of the operation at the step S450 has been explained. At a step S1670, the control unit 160 performs re-execution (i.e., retry) of the reading of the magnetic card 200.

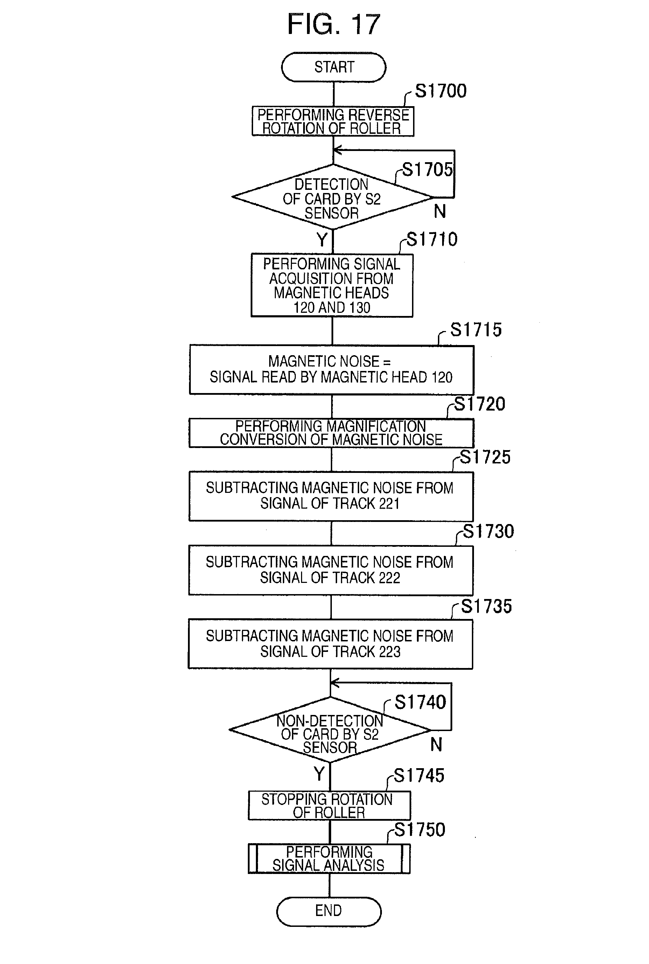

FIG. 17 is a flowchart for illustrating the re-execution of the reading of the magnetic card 200 at the step S1670. The operations at steps S1700 and S1705 are the same as the operations at the steps S700 and S705 of the first embodiment (FIG. 7).

At a step S1710, the control unit 160 reads the signals of the tracks 221-223 using the magnetic reading elements 131-133 of the magnetic head 130, and reads the magnetic noise using the magnetic reading elements of the magnetic head 120. In the processing at the step S1710, the magnetic body 220 of the magnetic card 200 has not attained onto the magnetic head 120. As a result, the magnetic reading elements of the magnetic head 120 read only the magnetic noise from the magnetic noise generation device 100. The magnetic reading elements 131-133 of the magnetic head 130 read the signals in which the magnetic noise from the magnetic noise generation device 100 is superimposed on the signals of the tracks 221-223.

At a step S 1715, the control unit 160 judges that the signal read by the magnetic head 120 is the magnetic noise. At a step S1720, the control unit 160 performs a Z-times (0<Z<1. 0) magnification conversion of the magnitude of the magnetic noise. The larger the distance (spacing) from the magnetic noise generation device 100 becomes, the smaller the magnitude of the magnetic noise from the magnetic noise generation device 100 becomes. In the present embodiment, the spacing between the magnetic head 120 and the magnetic noise generation device 100 is smaller than the spacing between the magnetic head 130 and the magnetic noise generation device 100. Accordingly, the magnitude of the magnetic noise read by the magnetic reading elements of the magnetic head 120 is larger than the magnitude of the magnetic-noise component of the signals read by the magnetic reading elements 131-133 of the magnetic head 130. On account of this, if the control unit 160 subtracts the magnetic noise, whose magnification conversion is not performed, from the signals read from the tracks 221-223, the result is that the magnetic noise is subtracted more than what is required. As a result, there is a possibility that the character conversion cannot be properly performed in the analysis processing after that.

At a step S 1725, the control unit 160 subtracts the magnetic noise, whose magnification conversion is performed, from the signal read from the track 221. Similarly, at steps S1730 and S1735, the control unit 160 subtracts the magnetic noise, whose magnification conversion is performed, from the signals read at the steps S222 and S223 respectively.

The operations at steps S1740, S1745, and S1750 are the same as the operations at the steps S715, S720, and S725 of the first embodiment (FIG 7), respectively.

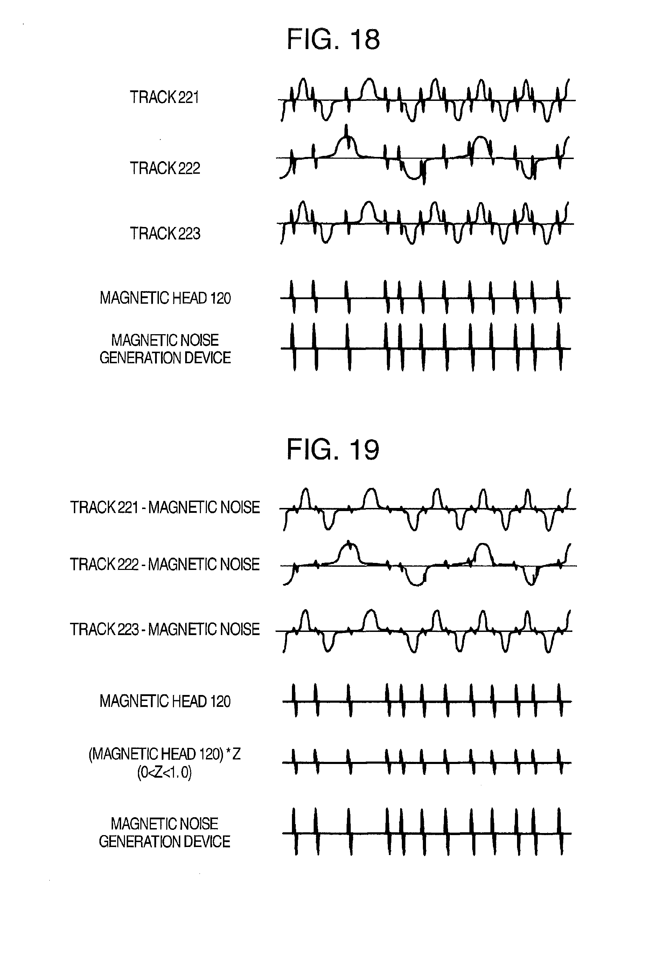

FIG 18 illustrates the signals acquired at the steps S1710 and S1715, and the signal generated by the magnetic noise generation device 100. The magnitude of the signal read by the magnetic head 120 is smaller than the magnitude of the magnetic noise generated by the magnetic noise generation device 100. Also, the magnitude of the magnetic noise superimposed on the signals of the tracks 221-223 is smaller than the magnitude of the signal (i.e., magnetic noise) acquired by the magnetic head 120.

FIG 19 illustrates the signals calculated at the steps S1720-S1735. If the control unit 160 subtracts the magnetic noise, whose magnification conversion is not performed, from the signals read from the tracks 221-223, the result is that the magnetic noise is subtracted more than what is required. Consequently, as was explained at the step S1720, the control unit 160 multiplies, by Z (0<Z<1. 0), the magnitude of the signal acquired by the magnetic head 120. Incidentally, it is preferable that the value of Z is determined in advance by the experiment. The control unit 160 subtracts the magnetic noise, whose magnification conversion is performed, from the signals read from the tracks 221-223. This subtraction causes the magnetic noise to disappear substantially.

As having been explained so far, according to the third embodiment, even when the signals are written into all of the tracks, it becomes possible for the control unit 160 to restore the signals written into the tracks by multiplying, by Z, the magnetic noise read using the magnetic reading elements of the magnetic head 120, and subtracting the Z-multiplied magnetic noise from the signals read from the tracks.

Incidentally, in the third embodiment, the control unit 160 performs the re-execution of the reading of the magnetic card 200 by performing the reverse rotation of the roller 150. In substitution therefor, the control unit 160 may also determine the magnetic noise by using the signal read using the magnetic head 120 at the time of the first forward rotation without performing the re-execution of the reading. This allows the control unit 160 to restore the signals of the other tracks, even if the control unit 160 does not perform the re-execution of the reading of the magnetic card 200.

In the foregoing description, the explanation has been given concerning the embodiments of the present invention on the basis of the several embodiments. The above-described embodiments of the present invention, however, are presented for making the understanding of the present invention easier, and the present invention is not limited thereto. It is of course, however, that various modifications and amendments can be made concerning the present invention without departing from the spirit of the invention and the scope of the appended claims, and that he equivalents to the present invention are included therein.

### REFERENCE SIGNS LIST

- 10: magnetic card reading device
- 100: magnetic noise generation device
- 110: magnetic card insertion slot
- 120: magnetic head (magnetic head Y)
- 125: shutter
- 130: magnetic head (magnetic head X)
- 131-133: magnetic reading elements
- 140S1-140S3: card detection sensors
- 141S1-141S3: light emitters
- 150: roller
- 160: control unit
- 200: magnetic card
- 210: card medium
- 220: magnetic body
- 221-223: tracks
- 300: magnetic card skimming device
- 310: magnetic head

## Claims

1. A magnetic card reading device, comprising:
a magnetic card insertion slot;
a magnetic noise generation device provided at the magnetic card insertion slot;
at least one magnetic head having a plurality of magnetic reading elements, and reading a first signal and a second signal, the first signal including a signal written into a magnetic body of the magnetic card and a magnetic noise, superimposed thereon, generated from the magnetic noise generation device, and the second signal including only the magnetic noise generated by the magnetic noise generation device; and
a data processing unit which removes the second signal from the first signal.

2. The magnetic card reading device according to CLAIM 1, wherein
first and second magnetic reading elements of the plurality of magnetic reading elements are deployed such that the first and second magnetic reading elements simultaneously read signals of different tracks of the magnetic body, the magnetic body displacing in accompaniment with the displacement of the magnetic card,
the first magnetic reading element reading the first signal based on a condition that the signal is written into the first track of the tracks to be read by the first magnetic reading element, the first signal including the signal and the magnetic noise, superimposed thereon, generated by the magnetic noise generation device,
the second magnetic reading element reading the second signal based on a condition that no signal is written into the second track of the tracks to be read by the second magnetic reading element, the second signal including only the magnetic noise generated by the magnetic noise generation device.

3. The magnetic card reading device according to CLAIM 2, wherein
the data processing unit judges that, if the magnitude of the second signal does not exceed a magnitude determined in advance, the second signal includes only the magnetic noise generated by the magnetic noise generation device.

4. The magnetic card reading device according to CLAIM 1, wherein
the magnetic noise generation device generates a magnetic noise that is repeated in accordance with a period determined in advance,
a particular magnetic reading element of the plurality of magnetic reading elements reading the first signal from the area existing on the magnetic body, and reading the second signal from an area in which the magnetic body does not exist, the area existing on direct extension of the displacement direction of the magnetic card.

5. The magnetic card reading device according to CLAIM 1, further comprising:
a shutter at the magnetic card insertion slot, the shutter being used for suppressing the insertion of a foreign body;
a first magnetic head for reading the first signal, the first magnetic head being the magnetic head for reading the signal written into the magnetic body of the magnetic card; and
a second magnetic head for reading the second signal, the second magnetic head being a magnetic head different from the first magnetic head, and being a magnetic head for detecting that the foreign body is inserted from the magnetic card insertion slot.

6. The magnetic card reading device according to CLAIM 5, wherein
the spacing between the first magnetic head and the second magnetic head is longer than the length of the magnetic card in the displacement direction.

7. The magnetic card reading device according to CLAIM 5 or 6, wherein
the data processing unit, when removing the second signal from the first signal, adjusts the magnitude of at least either of the first signal and the second signal on the basis of a first distance from the magnetic noise generation device to the first magnetic head, and a second distance from the magnetic noise generation device to the second magnetic head.

8. A magnetic card reading method, comprising the steps of:
(a) generating a magnetic noise for suppressing a skimming when a magnetic card is inserted;
(b) reading a first signal, the first signal including a signal written into a magnetic body of the magnetic card and the magnetic noise superimposed thereon;
(c) acquiring a second signal, the second signal including only the magnetic noise; and
(d) removing the second signal from the first signal.

9. The magnetic card reading method according to CLAIM 8, wherein
the magnetic card is equipped with the magnetic body including a plurality of tracks;
the step (b) is a step of reading a first track of the plurality of tracks, the signal being written into the first track;
the step (c) is a step of reading a second track of the plurality of tracks, the second track being different from the first track into which the signal is written, no signal being written into the second track; and
the step (b) and the step (c) are executed simultaneously.

10. The magnetic card reading method according to CLAIM 9,
wherein, at the step (c), it is judged that, if the magnitude of the second signal does not exceed a magnitude determined in advance, the second signal includes only the magnetic noise generated by a magnetic noise generation device.

11. The magnetic card reading method according to CLAIM 8, wherein
the step (a) is a step of generating the magnetic noise that is repeated in accordance with a period determined in advance;
the step (b) is a step of reading the signal from the magnetic body of the magnetic card; and
the step (c) is a step of reading the second signal from an area in which the magnetic body does not exist, the area existing on direct extension of the displacement direction of the magnetic card.

12. The magnetic card reading method according to CLAIM 8, wherein
the step (b) is a step that is executed by a first magnetic head, the first magnetic head being used for reading the signal from the magnetic body of the magnetic card; and
the step (c) is a step that is executed by a second magnetic head, the second magnetic head being a magnetic head different from the first magnetic head, and being a magnetic head for detecting that a foreign body is inserted from a magnetic card insertion slot.

13. The magnetic card reading method according to CLAIM 12, wherein
the spacing between the first magnetic head and the second magnetic head is so formed as to be longer than the length of the magnetic card in the displacement direction.

14. The magnetic card reading method according to CLAIM 12 or 13, wherein
the step (d) includes a step at which, when removing the second signal from the first signal, the magnitude of at least either of the first signal and the second signal is adjusted on the basis of a first distance from a magnetic noise generation device to the first magnetic head, and a second distance from the magnetic noise generation device to the second magnetic head.

15. The magnetic card reading method according to CLAIM 8, wherein
the steps (a) and (b) are executed;
the steps (c) and (d) are not executed if the signal written into the magnetic body was able to be restored from the second signal read at the step (b); and
the steps (c) and (d) are executed if the signal written into the magnetic body was not able to be restored from the second signal read at the step (b).

## Amended claims

### Amended claims under Art. 19.1 PCT

**1.** (AMENDED) A magnetic card reading device, comprising:
a magnetic card insertion slot;
a magnetic noise generation device provided at the magnetic card insertion slot;
at least one magnetic head having a plurality of magnetic reading elements, and reading a first signal and a second signal, the first signal including a signal written into a magnetic body of the magnetic card and a magnetic noise, superimposed thereon, generated from the magnetic noise generation device, and the second signal including only the magnetic noise generated by the magnetic noise generation device; and
a data processing unit which removes the second signal from the first signal, bwherein first and second magnetic reading elements of the plurality of magnetic reading elements are deployed such that the first and second magnetic reading elements simultaneously read signals of different tracks of the magnetic body, the magnetic body displacing in accompaniment with the displacement of the magnetic card,
the first magnetic reading element reading the first signal based on a condition that the signal is written into the first track of the tracks to be read by the first magnetic reading element, the first signal including the signal and the magnetic noise, superimposed thereon, generated by the magnetic noise generation device,
the second magnetic reading element reading the second signal based on a condition that no signal is written into the second track of the tracks to be read by the second magnetic reading element, the second signal including only the magnetic noise generated by the magnetic noise generation device,
the data processing unit judges that, if the magnitude of the second signal does not exceed a magnitude determined in advance, the second signal includes only the magnetic noise generated by the magnetic noise generation device.

**2.** CANCELLED)

**3.** CANCELLED)

**4.** CANCELLED)

**5.** (AMENDED) A magnetic card reading device, comprising:
a magnetic card insertion slot;
a magnetic noise generation device provided at the magnetic card insertion slot;
at least one magnetic head having a plurality of magnetic reading elements, and reading a first signal and a second signal, the first signal including a signal written into a magnetic body of the magnetic card and a magnetic noise, superimposed thereon, generated from the magnetic noise generation device, and the second signal including only the magnetic noise generated by the magnetic noise generation device; and
a data processing unit which removes the second signal from the first signal;
a shutter at the magnetic card insertion slot, the shutter being used for suppressing the insertion of a foreign body;
a first magnetic head for reading the first signal, the first magnetic head being the magnetic head for reading the signal written into the magnetic body of the magnetic card; and
a second magnetic head for reading the second signal, the second magnetic head being a magnetic head different from the first magnetic head, and being a magnetic head for detecting that the foreign body is inserted from the magnetic card insertion slot.

**6.** The magnetic card reading device according to CLAIM 5, wherein
the spacing between the first magnetic head and the second magnetic head is longer than the length of the magnetic card in the displacement direction.

**7.** The magnetic card reading device according to CLAIM 5 or 6, wherein
the data processing unit, when removing the second signal from the first signal, adjusts the magnitude of at least either of the first signal and the second signal on the basis of a first distance from the magnetic noise generation device to the first magnetic head, and a second distance from the magnetic noise generation device to the second magnetic head.

**8.** A magnetic card reading method, comprising the steps of:
(a) generating a magnetic noise for suppressing a skimming when a magnetic card is inserted;
(b) reading a first signal, the first signal including a signal written into a magnetic body of the magnetic card and the magnetic noise superimposed thereon;
(c) acquiring a second signal, the second signal including only the magnetic and noise;
(d) removing the second signal from the first signal, wherein.
the magnetic card is equipped with the magnetic body including a plurality of tracks;
the step (b) is a step of reading a first track of the plurality of tracks, the signal being written into the first track;
the step (c) is a step of reading a second track of the plurality of tracks, the second track being different from the first track into which the signal is written, no signal being written into the second track;
the step (b) and the step (c) are executed simultaneously; and
at the step (c), it is judged that, if the magnitude of the second signal does not exceed a magnitude determined in advance, the second signal includes only the magnetic noise generated by a magnetic noise generation device.

**9.** CANCELLED)

**10.** CANCELLED)

**11.** CANCELLED)

**12.** The magnetic card reading method according to CLAIM 8, wherein
the step (b) is a step that is executed by a first magnetic head, the first magnetic head being used for reading the signal from the magnetic body of the magnetic card; and
the step (c) is a step that is executed by a second magnetic head, the second magnetic head being a magnetic head different from the first magnetic head, and being a magnetic head for detecting that the magnetic card is inserted from a magnetic card insertion slot.

**13.** The magnetic card reading method according to CLAIM 12, wherein
the spacing between the first magnetic head and the second magnetic head is so formed as to be longer than the length of the magnetic card in the displacement direction.

**14.** (AMENDED) The magnetic card reading method according to CLAIM 12 or 13, wherein
the step (d) includes a step at which, when removing the second signal from the first signal, the magnitude of at least either of the first signal and the second signal is adjusted on the basis of a first distance from a magnetic noise generation device to the first magnetic head, and a second distance from the magnetic noise generation device to the second magnetic head.

**15.** The magnetic card reading method according to CLAIM 8, wherein
the steps (a) and (b) are executed;
the steps (c) and (d) are not executed if the signal written into the magnetic body was able to be restored from the second signal read at the step (b); and
the steps (c) and (d) are executed if the signal written into the magnetic body was not able to be restored from the second signal read at the step (b).
